# EUROPEAN PATENT APPLICATION

(11) **EP 4 353 504 A1**
(43) Date of publication of application: **17.04.2024**
(21) Application number: 23175189.2
(22) Date of filing: 24.05.2023
(51) Int. Cl.: B60J 7/043, B60J 10/82, B60J 7/19

(54) **ANTI-LIFT SUNROOF STRUCTURE**

(30) Priority: 11.10.2022 US 202263415065 P
(71) Applicant: Fuzhou Mingfang Automobile Parts Industry Co., Ltd., Fuzhou (CN); Hsin Chong Machinery Works Co., Ltd., Taoyuan City 335 (TW)
(72) Inventor: CHIU, Tzu-Heng, 335 Taoyuan City (TW); LAN, Yi-Jen, 335 Taoyuan City (TW); DAYOUB, Karim, 335 Taoyuan City (TW); PELINO, Chris., 335 Taoyuan City (TW)
(74) Representative: 2K Patentanwälte Blasberg Kewitz & Reichel

(57) **Abstract**

An anti-lift sunroof structure is provided, which can be opened and closed on an opening (A1) of a vehicle roof. The anti-lift sunroof structure includes a glass panel (10), a window frame (20), and a support element (40). The window frame (20) includes a front frame bar (21), two side frame bars (22), and a rear frame bar (23). Two ends of each side frame bar (22) are respectively connected to the front frame bar (21) and the rear frame bar (23) to form a mounting groove (24) for installation of the glass panel (10). The support element (40) is arranged corresponding to the front frame bar (21) and includes a stop plate (41) extended away from the rear frame bar (23). When the anti-lift sunroof structure is in a close position, the stop plate (41) is located under the vehicle roof. Accordingly, sealing capability is prevented from being affected by excessive outward suction from a pressure difference when the vehicle is running at high speed.

## Description

### Technical Field

The present disclosure relates to a field of vehicles and in particular, to an anti-lift sunroof structure for automobiles.

### Description of Related Art

In recent years, sunroofs have been widely used in various vehicles to meet the needs of users. Generally, there are two types of sunroofs: a fixed type and a movable type. Regardless of whether it is a fixed-type sunroof or a movable -type sunroof. In order to avoid entry of rain or moisture into the inside of a vehicle, rubber strips are disposed on an outer periphery of a window frame where a glass panel is mounted, so that the rubber strips can achieve sealing between the window frame and a vehicle metal part through elastic deformation of the rubber strips.

However, when the vehicle is running at high speed, a pressure difference between the inside and the outside of the vehicle causes a suction force to lift the movable-type sunroof toward the outside of the vehicle. Especially, when the speed of the vehicle reaches more than 200 kilometers per hour, a distance of positional shifting of the movable-type sunroof increases, which causes the rubber strips to be separated from the vehicle metal part, thus affecting a sealing effect of the rubber strips. Even worse, it may even cause the movable-type sunroof to be detached or fly away.

In light of the above, the inventor of the present disclosure has devoted himself to doing research and studying scientific principles so as to solve the above problem of related-art techniques.

### SUMMARY OF THE DISCLOSURE

A main objective of the present disclosure is to prevent a sunroof structure from being excessively sucked outward the outside of a vehicle due to a pressure difference when the vehicle is running at high speed, and thus affecting sealing capability.

Accordingly, the present disclosure provides an anti-lift sunroof structure capable of opening and closing an opening of a vehicle roof. The anti-lift sunroof structure includes a glass panel, a window frame, and a support element. The window frame includes a front frame bar, two side frame bars, and a rear frame bar. Two ends of each of the two side frame bars are respectively connected to the front frame bar and the rear frame bar to define a mounting groove, and a glass panel is mounted to the mounting groove. The support element is disposed corresponding to the front frame bar. The support element includes a stop plate. The stop plate protrudes from the front frame bar and is extended in a direction away from the rear frame bar. When the anti-lift sunroof structure is in a close position, the stop plate is located under the vehicle roof.

According to one embodiment of the present disclosure, the anti-lift sunroof structure further includes a sealing strip disposed on an outer periphery of the window frame to abut against an inner edge of the opening. The stop plate protrudes from the sealing strip, and when the stop plate is in a state of abutting upwardly against the vehicle roof, the sealing strip continuously abuts against the inner edge of the opening.

According to one embodiment of the present disclosure, a wrapping portion is extended from the front frame bar, and the wrapping portion wraps the stop plate.

According to one embodiment of the present disclosure, the anti-lift sunroof structure further includes a sealing strip. The sealing strip is fixed to the window frame in an adhesion manner or an engagement manner.

According to one embodiment of the present disclosure, the anti-lift sunroof structure further includes a sealing strip. The outer periphery of the window frame is provided with an engagement groove, the sealing strip includes an abutting portion and a fastening strip extended from the abutting portion, and the fastening strip is engaged with the engagement groove to make the abutting portion abut against the window frame for sealing. The window frame is provided with a covering portion extended in a direction away from the mounting groove, and the covering portion abuts against and covers at least a portion of the abutting portion.

According to one embodiment of the present disclosure, the support element is provided with a plurality of coupling holes, the window frame is provided with a plurality of coupling blocks, and the coupling blocks are engaged with the coupling holes respectively.

According to one embodiment of the present disclosure, the anti-lift sunroof structure further includes multiple support elements. The support elements are disposed corresponding to the rear frame bar and the side frame bars, respectively. The window frame further includes a plurality of connection plates, the connection plates are arranged at junctions of the front frame bar and the two side frame bars and arranged at junctions of the rear frame bar and the side frame bars, and the connection plates together support the glass panel. Each of the connection plates is provided with two coupling blocks, a coupling hole is defined at each of two ends of each of the support elements, and the coupling blocks are engaged with the coupling holes respectively to fix the support elements to the window frame.

When the anti-lift sunroof structure of the present disclosure closes the opening of the vehicle roof, the stop plate is located under the vehicle roof to prevent the window frame from lifting upward. Accordingly, the present disclosure may prevent the sunroof structure from being overly lifted by outward suction resulting from a pressure difference when the vehicle is running at high speed, and prevent the problem of causing the sealing strip to be separated from the vehicle roof and affecting the sealing capability.

### BRIEF DESCRIPTION OF THE DRAWINGS

FIG. 1 is a perspective exploded view of the present disclosure with a vehicle roof.
FIG. 2 is a perspective exploded view of the present disclosure.
FIG. 3 is a perspective exploded view of a window frame and a support element of the present disclosure.
FIG. 4 is a cross-sectional view illustrating a closed window according to the present disclosure.
FIG. 5 is a cross-sectional view illustrating the closed window in use according to the present disclosure.
FIG. 6 is a cross-sectional view according to another embodiment of the present disclosure.

### DETAILED DESCRIPTION

The technical content of the present disclosure is described in detail below with reference to accompanying drawings. However, the accompanying drawings are only for illustrative purposes and are not intended to limit the present disclosure.

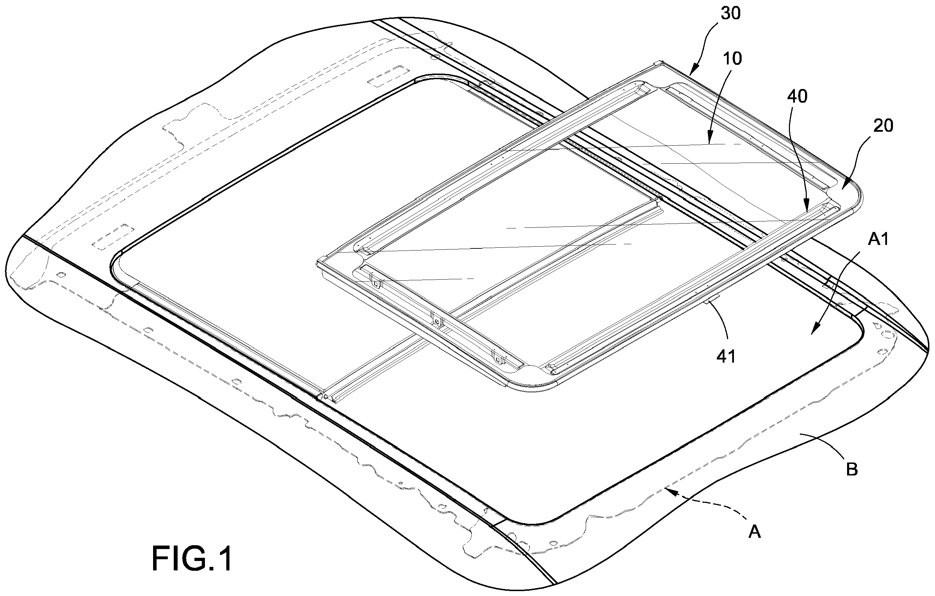

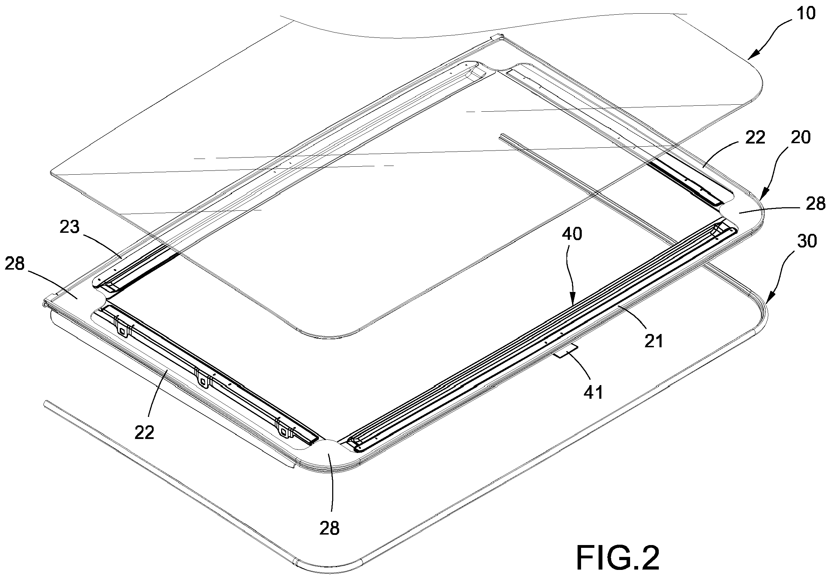

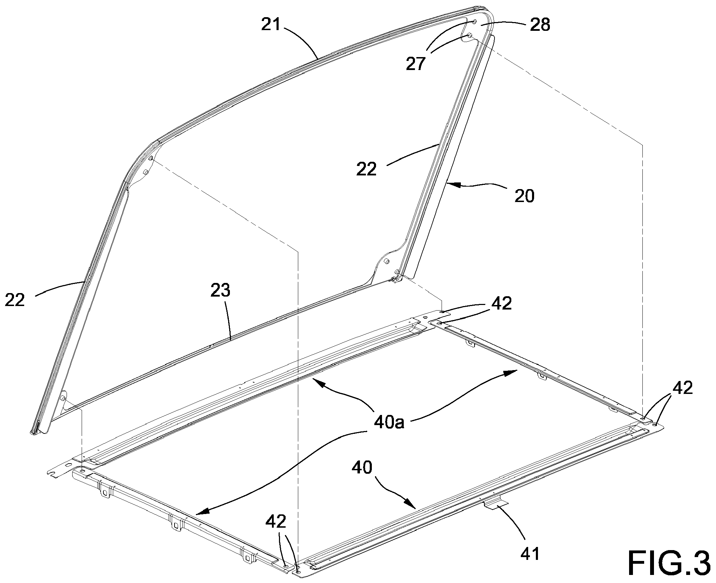

The present disclosure provides an anti-lift sunroof structure which may be opened and closed corresponding to an opening A1 of a vehicle roof. Referring to FIGS. 1 to 4, the anti-lift sunroof structure mainly includes a glass panel 10, a window frame 20, a sealing strip 30, and a support element 40. It should be noted that the vehicle roof in the present embodiment includes a reinforcement frame A and a sheet metal portion B. The sheet metal portion B covers a top and sides of the reinforcement frame A to increase structural strength through the reinforcement frame A. The opening A1 is defined by the reinforcement frame A and the sheet metal portion B and is provided for placing the anti-lift sunroof structure. The present disclosure is not limited to the above-mentioned. For example, the vehicle roof may only include the sheet metal portion B.

In the present embodiment, the glass panel 10 is substantially of a rectangular shape, and the four corners of the glass panel 10 are provided with rounded corners to avoid cracks due to stress concentration. The present disclosure is not limited in this regard, and designers may adjust a shape of the glass panel 10 according to requirements.

The window frame 20 matches the shape of the glass panel 10 and surrounds an outer periphery and a bottom of the glass panel 10. Specifically, the window frame 20 includes a front frame bar 21, two side frame bars 22, and a rear frame bar 23. Two ends of each side frame 22 are respectively connected to the front frame bar 21 and the rear frame bar 23. The front frame bar 21, the rear frame bar 23, and the side frame bars 22 form a mounting groove 24 for installation of the glass panel 10. The glass panel 10 may be mounted to the mounting groove 24 of the window frame 20 through bonding (adhesion), press-fitting, or buckling with fasteners, etc. The present disclosure is not limited to a particular assembly method. Any assembly method may be adopted as long as the glass panel 10 is fixed to the mounting groove 24. In the present embodiment, the window frame 20 is integrally formed (or formed in one piece) by injection molding of PU (polyurethane), but the present disclosure is not limited in this regard. The window frame 20 may also be integrally formed (or formed in one piece) by injection molding of other plastic materials.

The sealing strip 30 is disposed on an outer periphery of the window frame 20 to abut against an inner edge of the opening A1 of the sheet metal portion B to form a seal when the sunroof structure closes the opening A1 of the sheet metal portion B. The sealing strip 30 may be fixed to the window frame 20 by bonding (adhesion) or engagement. The drawing of the present embodiment shows fixation by means of engagement, but the present disclosure is not limited to the above-mentioned method. Specifically, the outer periphery of the window frame 20 in the present embodiment is provided with an engagement groove 25, and a covering portion 26 is extended from the outer periphery of the window frame 20. The sealing strip 30 includes an abutting portion 31 and a fastening strip 32 extended from the abutting portion 31. The covering portion 26 is located on a top of the window frame 20 and extended away from the mounting groove 24. The engagement groove 25 is located at a bottom of the window frame 20 with respect to the covering portion 26. A cross-section of the fastening strip 32 is roughly hook-shaped to be engaged with the engagement groove 25, so that the abutting portion 31 tightly abuts against the window frame 20 to achieve sealing, and the covering portion 26 abuts against and covers at least a portion of the abutting portion 31, so as to effectively ensure the sealing between the sealing strip 30 and the window frame 20.

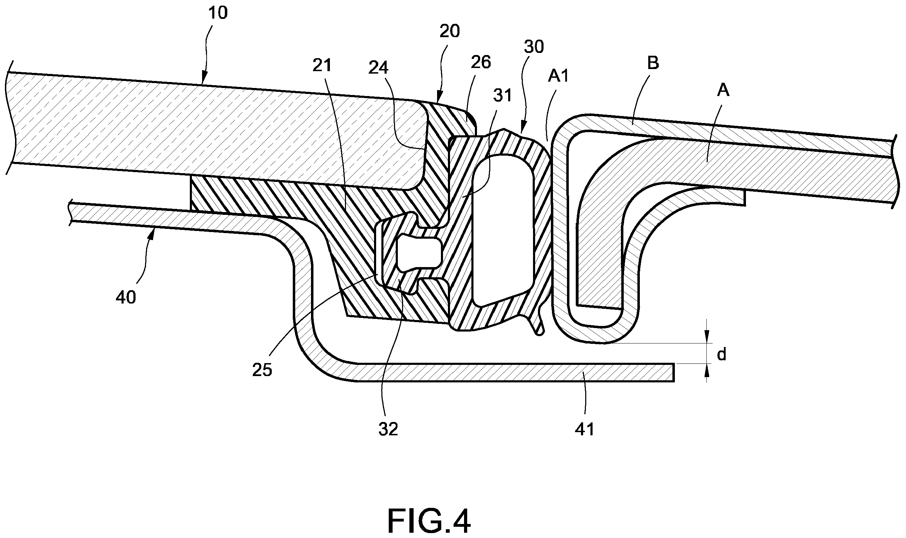

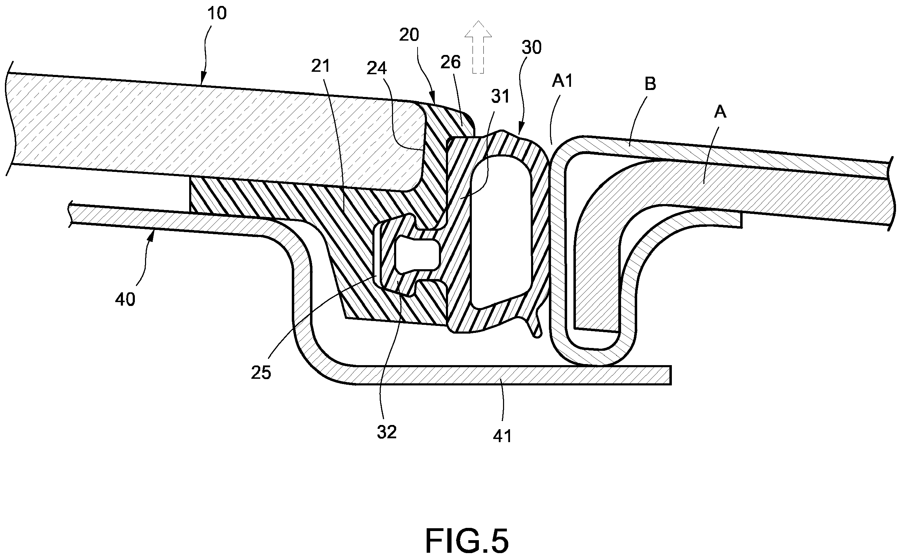

The support element 40 is disposed corresponding to the front frame bar 21. A stop plate 41 is extended from the support element 40 in a direction away from the rear frame bar 23. The stop plate 41 protrudes from the front frame bar 21 and the sealing strip 30. Specifically, the support element 40 is provided with a plurality of coupling holes 42, and the window frame 20 is provided with a plurality of coupling blocks 27. Each coupling block 27 is secured in one of the coupling holes 42, so as to fix the support element 40 to the window frame 20. Please refer to FIG. 4, when the anti-lift sunroof structure of the present disclosure closes the opening A1 of the sheet metal portion B, the stop plate 41 is located under the sheet metal portion B of the vehicle roof and has a distance d from the sheet metal portion B. Accordingly, the stop plate 41 may stop the window frame 20 from lifting upward. In this way, when the sunroof structure is sucked upward due to a pressure difference between the inside and the outside of a vehicle as a result of the high-speed running of the vehicle, the stop plate 41 of the sunroof structure abuts against the reinforcement frame A, so the window frame 20 is only sucked to move the aforementioned distance d, so that the sealing strip 30 may still keep abutting against the inner edge of the opening A1, thereby effectively maintaining the sealing, as shown in FIG. 5.

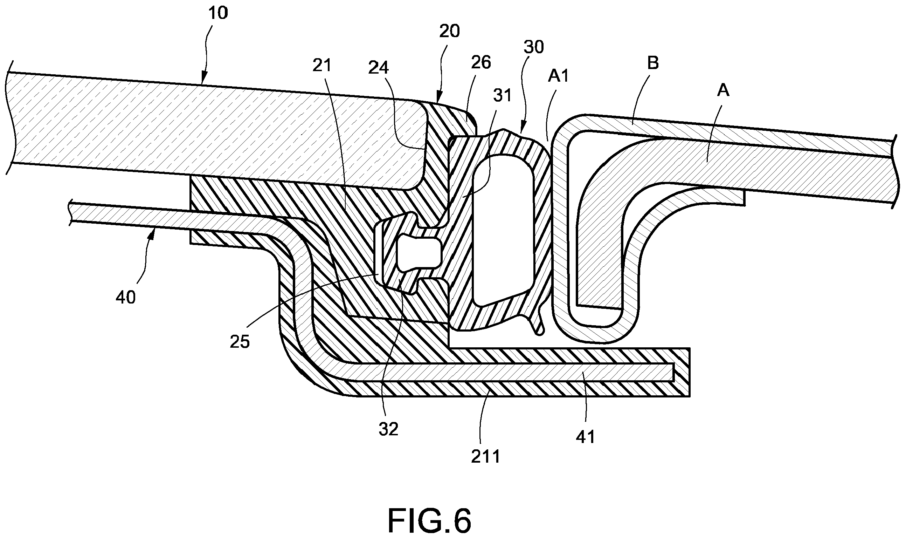

In some embodiments, please refer to FIG. 6. FIG. 6 is another embodiment of the present disclosure. This embodiment is mainly different in that there is a wrapping portion 211 extended from the front frame bar 21, and the wrapping portion 211 wraps the stop plate 41. Specifically, the wrapping portion 211 in the present embodiment is injection molded together with the window frame 20 to cover the stop plate 41. The present disclosure is not limited in this regard. Such a configuration may prevent the stop plate 41 from directly contacting the sheet metal portion B of the vehicle roof. The present embodiment uses the wrapping portion 211 (PU) with low hardness to touch the sheet metal portion B (metal) of the vehicle roof, thus reducing noises generated from contacting the sheet metal portion B of the vehicle roof and may provide a buffer to reduce an impact force during contact. At the same time, the stop plate 41 wrapped inside may provide desirable structural strength for the overall structure.

In detail, the anti-lift sunroof structure of the present disclosure further includes additional support elements 40, and the additional support elements are respectively arranged corresponding to the rear frame bar 23 and the side frame bars 22, so as to strengthen the structural strength of the window frame 20. The window frame 20 further includes a plurality of connection plates 28, and the connection plates 28 are respectively arranged at junctions of the front frame bar 21 and the side frame bars 22 and arranged at junctions of the rear frame bar 23 and the side frame bars 22. The connection plates 28 collectively support the glass panel 10. Each connection plate 28 is provided with two coupling blocks 27, and a coupling hole 42 is defined at each of two ends of each support element 40. Each coupling block 27 is fixed in one of the coupling holes 42, thereby fixing each support element 40 to the window frame 20. A fixing method for the support element 40 and the window frame 20 is not limited in this regard. For example, the window frame 20 may also directly cover each support element 40 during injection molding.

## Claims

1. An anti-lift sunroof structure, openable corresponding to an opening (A1) of a vehicle roof, the anti-lift sunroof structure comprising:
a glass panel (10);
a window frame (20), comprising a front frame bar (21), two side frame bars (22), and a rear frame bar (23), wherein two ends of each of the two side frame bars (22) are respectively connected to the front frame bar (21) and the rear frame bar (23) to define a mounting groove (24), and the glass panel (10) is mounted to the mounting groove (24); and
a support element (40), disposed corresponding to the front frame bar (21), comprising a stop plate (41) disposed protrusively from the front frame bar (21) and extended in a direction away from the rear frame bar (23), wherein when the anti-lift sunroof structure is in a close position, the stop plate (41) is located under the vehicle roof.

2. The anti-lift sunroof structure according to claim 1, further comprising a sealing strip (30) disposed on an outer periphery of the window frame (20) to abut against an inner edge of the opening (A1), wherein the stop plate (41) protrudes from the sealing strip (30), and when the stop plate (41) abuts against the vehicle roof, the sealing strip (30) continuously abuts against the inner edge of the opening (A1).

3. The anti-lift sunroof structure according to claim 1 or 2, wherein the front frame bar (21) comprises a wrapping portion (211) extended therefrom, and the wrapping portion (211) wraps the stop plate (41).

4. The anti-lift sunroof structure according to claim 2, wherein the sealing strip (30) is fixed to the window frame (20) in an adhesion manner or an engagement manner.

5. The anti-lift sunroof structure according to claim 2, wherein the window frame (20) comprises an engagement groove (25) defined on the outer periphery thereof, the sealing strip (30) comprises an abutting portion (31) and a fastening strip (32) extended from the abutting portion (31), and the fastening strip (32) is engaged with the engagement groove (25) to make the abutting portion (31) abut against the window frame (20) for sealing.

6. The anti-lift sunroof structure according to claim 5, wherein the window frame (20) comprises a covering portion (26) extended in a direction away from the mounting groove (24), and the covering portion (26) abuts against and covers at least a portion of the abutting portion (31).

7. The anti-lift sunroof structure according to claim 1, wherein the support element (40) comprises a plurality of coupling holes (42), the window frame (20) comprises a plurality of coupling blocks (27), and the coupling blocks (27) are engaged with the coupling holes (42) respectively.

8. The anti-lift sunroof structure according to claim 1, further comprising a plurality of support elements (40), wherein the support elements (40) are disposed corresponding to the rear frame bar (23) and the side frame bars (22), respectively.

9. The anti-lift sunroof structure according to claim 8, wherein the window frame (20) further comprises a plurality of connection plates (28), the connection plates (28) are arranged at junctions of the front frame bar (21) and the two side frame bars (22) and arranged at junctions of the rear frame bar (23) and the side frame bars (22), and the connection plates (28) collectively support the glass panel (10).

10. The anti-lift sunroof structure according to claim 9, wherein each of the connection plates (28) comprises two coupling blocks (27), a coupling hole (42) is defined at each of two ends of each of the support elements (40), and the coupling blocks (27) are engaged with two coupling holes (42) respectively to fix the support elements (40) to the window frame (20).
